Europäisches Patentamt

European Patent Office

Office européen des brevets

(11) Veröffentlichungsnummer: **0 553 411 A1**

## EUROPÄISCHE PATENTANMELDUNG

(21) Anmeldenummer: **92119178.9**

(22) Anmeldetag: **10.11.92**

(51) Int. Cl.5: **G01B 3/20**, G01D 5/24

(30) Priorität: **24.01.92 DE 4201813**

(43) Veröffentlichungstag der Anmeldung:
**04.08.93 Patentblatt 93/31**

(84) Benannte Vertragsstaaten:
**AT CH ES FR GB IT LI**

(71) Anmelder: **PAV Präzisions-Apparatebau
Aktiengesellschaft
Schaaner Strasse 40
FL-9490 Vaduz(LI)**

(72) Erfinder: **Van Der Wal, Romke
Lymbeekstraat 148
NL-5612 NH Eindhoven(NL)**
Erfinder: **Nigg, Silvio
Riet-Strasse 1036
F-9496 Balzers(LI)**

(74) Vertreter: **Witte, Alexander, Dr.-Ing. et al
Witte, Weller, Gahlert & Otten Patentanwälte
Augustenstrasse 14
W-7000 Stuttgart 1 (DE)**

(54) **Vorrichtung zum Messen einer geometrischen Grösse.**

㊵ Eine Vorrichtung zum Messen einer geometrischen Größe (2), beispielsweise einer Länge (x), weist ein Basisteil (11) auf, an dem eine eine Elektrodenanordnung umfassende Längsmarkierung (18) angeordnet ist. Ferner ist ein relativ zu dem Basisteil (11) verstellbarer Läufer (12) vorgesehen, an dem eine mit der Längsmarkierung (18) zusammenwirkende ebenfalls eine Elektrodenanordnung umfassende Meßanordnung vorgesehen ist. Weiterhin ist eine Auswerteelektronik zur Auswertung von Signalen der Meßanordnung vorgesehen, wobei an dem Basisteil und dem Läufer je ein Meßschnabel angeordnet ist und wobei ferner die beiden Meßschnäbel durch Verstellen des Läufers (12) auf die zu messende Größe (x) einstellbar sind. Die Elektrodenanordnungen wirken als Kondensatoranordnung zusammen, die zumindest einen in seinem Kapazitätswert von dem Verstellen des Läufers abhängigen Meßkondensators aufweist. Die Vorrichtung ist dadurch gekennzeichnet, daß die Meßanordnung mittels des Meßkondensators einen in seiner Kapazität bekannten Sollwertkondensator umlädt.

Fig. 1

EP 0 553 411 A1

Die Erfindung betrifft eine Vorrichtung zum Messen einer geometrischen Größe, beispielsweise einer Länge oder eines Winkels, mit einem Basisteil, an dem eine eine Elektrodenanordnung umfassende Längsmarkierung angeordnet ist, und mit einem relativ zu dem Basisteil verstellbaren Läufer, an dem eine mit der Längsmarkierung zusammenwirkende, ebenfalls eine Elektrodenanordnung umfassende Meßanordnung vorgesehen ist, sowie mit einer Auswerteelektronik zur Auswertung von Signalen der Meßanordnung, wobei an dem Basisteil und dem Läufer je ein Meßschnabel angeordnet ist, wobei ferner die beiden Meßschnäbel durch Verstellen des Läufers auf die zu messende Größe einstellbar sind, und wobei schließlich die Elektrodenanordnungen als Kondensatoranordnung zusammenwirken, die zumindest einen in seinem Kapazitätswert von dem Verstellen des Läufers abhängigen Meßkondensator aufweist.

Eine derartige Vorrichtung ist aus der internationalen Anmeldung PCT/DE 87/005546 bekannt.

Die bekannte Vorrichtung ist eine Schieblehre mit einem ersten Meßteil und einem relativ dazu in Längsrichtung verstellbaren zweiten Meßteil. Auf dem ersten Meßteil ist eine kammartig ausgebildete flächenhafte Elektrode angeordnet, die mit flächenhaften Meßelektroden des anderen Meßteiles zusammenwirken.

Die beiden Elektrodenanordnungen bilden eine Kondensatoranordnung, deren Kapazitätswert in Abhängigkeit von der Relativbewegung der beiden Meßteile zueinander variiert.

Die einzelnen Flächen der Elektrodenanordnungen sind an eine Auswerteeinheit angeschlossen, deren Funktion nicht näher beschrieben ist.

Eine weitere Vorrichtung zum Messen einer geometrischen Größe ist aus der internationalen Anmeldung PCT/EP 87/00817 bekannt.

Die bekannte Vorrichtung ist eine Meßkluppe und dient zum Vermessen von Schlachtvieh, von Baumstämmen, von Käselaiben oder dgl. Gegenständen. Bei der bekannten Meßkluppe ist das Basisteil ein länglicher Stab, von dem wie auch von dem Läufer der jeweilige Meßschnabel rechtwinklig absteht.

Die Längsmarkierung ist ein an dem Stab vorgesehenes leiterförmiges Gebilde, das abwechselnd aus magnetisiertem und unmagnetisiertem Material gebildet ist. Ferner umfaßt die Meßanordnung einen Längensensor mit einem magnetfeldempfindlichen Element, wie einem Halleffektsensor.

Beim Verschieben des Läufers gegenüber dem Stab detektiert der Halleffektsensor die abwechselnd magnetisch und nichtmagnetisch ausgebildeten Zonen. Die Meßanordnung gibt diese Signale an eine Auswerteelektronik weiter, die daraus in nicht näher beschriebener Weise die absolute Position des Läufers zu dem Stab ermittelt.

Bei der bekannten Meßkluppe ergeben sich Probleme bei magnetischen Störfeldern, was dementsprechend eine sorgfältige Abschirmung des magnetfeldempfindlichen Elementes erfordert. Ferner ist die Meßgenauigkeit wegen der starken Streuwirkung der magnetisierten Bereiche gering. Dementsprechend ist die bekannte Meßkluppe auch zum Vermessen von großformatigen Gegenständen vorgesehen.

Aus der Praxis sind ferner Verfahren zum Messen geometrischer Größen bekannt, bei welchen mit einer bestimmten Anordnung von beabstandeten Kapazitäten phasenverschobene Spanungen erzeugt werden. Die Lageinformation ergibt sich hier aus der Phasenverschiebung, die sich beim Verschieben und damit Verstellen der Kapazitäten einstellt. Eine solche Meßanordnung ist beispielsweise aus der EP-A-0 18 4 584 bekannt.

Weiterhin ist es bekannt, derartige Kapazitäten in kapazitiven Meßbrücken zu vermessen, wobei die Meßbrücke mittels eines Mikroprozessors abgeglichen wird. Hier liegt die Lageinformation dementsprechend in der Amplitude.

Diese Verfahren haben den Nachteil, daß zunächst ein kleines Analogsignal - Phasenverschiebung oder Spannungsamplitude - verstärkt werden muß, bevor es ausgewertet werden kann. Da im allgemeinen die eingangs genannten Vorrichtungen zum Messen einer geometrischen Größe mit einer internen Versorgung, d.h. einer kleinen Batterie, wie einer Knopfzelle, versehen sind, um vom elektrischen Netz unabhängig zu sein, stehen lediglich kleine Versorgungsspannungen und geringe Leistungen zur Verfügung. Damit ist es jedoch sehr aufwendig, kleine Analogsignale zu verstärken.

Ausgehend von diesem Stand der Technik liegt der Erfindung die Aufgabe zugrunde, eine Vorrichtung der eingangs genannten Art dahingehend weiterzubilden, daß die zu messende geometrische Größe bei einfachem Aufbau mit hoher Auflösung und Genauigkeit gemessen werden kann. Ferner soll die Messung mit geringem Stromverbrauch erfolgen, wobei außerdem der Gesamtaufbau wirtschaftlich und störungsfrei sein soll.

Diese Aufgabe wird erfindungsgemäß dadurch gelöst, daß die Meßanordnung mittels des Meßkondensators einen in seiner Kapazität bekannten Sollwertkondensator umlädt.

Die der Erfindung zugrundeliegende Aufgabe wird auf diese Weise vollkommen gelöst, weil die in dem Kapazitätswert des Meßkondensators liegende Lageinformation durch ein "Umschütten" kleiner Ladungsmengen bestimmt wird.

2

Dabei spielt es keine Rolle, ob der Meßkondensator oder der Sollwertkondensator den größeren Kapazitätswert aufweist. Bekanntermaßen berechnet sich die in einem Kondensator gespeicherte Ladung aus dem Produkt von Kapazitätswert mal anliegender Spannung. Wird nun diese Ladungsmenge in einen Kondensator anderer - aber bekannter - Kapazität umgeladen, so ändert sich die Spannung dementsprechend im Verhältnis der beiden Kapazitätswerte. Ist die Kapazität, in die umgeladen wird, größer als die Ausgangskapazität, so geht die Spannung zurück und umgekehrt.

In einem bevorzugten Ausführungsbeispiel weist der Sollwertkondensator eine größere Kapazität auf als der Meßkondensator, wobei die Meßanordnung den Sollwertkondensator mittels des Meßkondensators schrittweise auf eine vorbestimmte Spannung umlädt.

Hier ist von Vorteil, daß der Sollwertkondensator sowohl aufgeladen, wie auch entladen werden kann. Entweder wird von der in dem Sollwertkondensator anfänglich gespeicherten Ladung schrittweise eine bestimmte Ladung entfernt oder es wird eine bestimmte Ladung zu der bereits im Sollwertkondensator befindlichen Ladung hinzuaddiert. Dabei ändert sich die über dem Sollwertkondensator liegende Spannung um ein Spannungsinkrement, das proportional zu dem Verhältnis der beiden Kapazitätswerte ist; dies wurde oben bereits beschrieben.

Aus der Zahl der Schritte, die erforderlich sind, um den Sollwertkondensator auf die vorbestimmte Spannung aufzuladen, kann dann die unbekannte Kapazität des Meßkondensators bestimmt werden. Bei diesem "Löffelkondensatorprinzip" richtet sich der Stromverbrauch im wesentlichen nach der Größe des Sollwertkondensators und der Schrittfrequenz. Ferner ist hier von Vorteil, daß der Sollwertkondensator auf eine relativ große Spannung aufgeladen werden kann, die beispielsweise mittels eines einfachen Komperators mit einer entsprechenden Referenzspannung verglichen werden kann. Das schrittweise Aufladen kann dann beendet werden, wenn die Spannung an dem Sollwertkondensator die vorbestimmte Spannung erreicht hat. Somit wird hier das eingangs genannte Problem überwunden, daß nämlich zur Bestimmung unbekannter Kapazitäten entweder kleine Phasenverschiebungen oder kleine Spannungsamplituden gemessen werden müssen. Bei der erfindungsgemäßen Vorrichtung wird daher eine hohe Meßgenauigkeit bei geringem Stromverbrauch und hoher Fehlersicherheit erreicht.

Ferner ist es bevorzugt, wenn die Elektrodenanordnung der Längsmarkierung derart kammartig ausgebildet ist, daß sich beim Verstellen des Läufers der Kapazitätswert des zumindest eines Meßkondensators zyklisch zwischen einem Maximal- und einem Minimalwert ändert.

Hier ist von Vorteil, daß eine höhere Auflösung erreicht wird. Aus der Zahl der Maxima oder Minima, die seit dem Verstellen aus einer Anfangsposition vergangen sind, kann zunächst die grobe Position des Läufers längs des Basisteiles bestimmt werden. Aus dem genauen Kapazitätswert des Meßkondensators wird dann die Feinposition ermittelt, die zusammen mit der oben genannten Grobposition die absolute Stellung des Läufers angibt.

Weiterhin ist es bevorzugt, wenn die Kondensatoranordnung zumindest zwei gegeneinander beabstandet angeordnete Meßkondensatoren umfaßt.

Hier ist von Vorteil, daß eine noch höhere Auflösung erreicht wird. Da nämlich die zumindest zwei Meßkondensatoren beabstandet zueinander angeordnet sind, weist beispielsweise einer der beiden Meßkondensatoren den maximalen oder minimalen Kapazitätswert auf, während der andere im Bereich dazwischen liegt, also "phasenverschoben" im Kapazitätswert ist. Mit phasenverschoben ist hier also gemeint, daß der Abstand zwischen den beiden Meßkondensatoren von der Teilung der Längsmarkierung verschieden ist. Dies kann beispielsweise dadurch erreicht werden, daß auf dem Basisteil zwei gegeneinander verschobene Kondensatorplatten nebeneinander angeordnet sind.

Weiterhin ist es bevorzugt, wenn die Kondensatoranordnung zumindest vier gegeneinander beabstandet angeordnete Meßkondensatoren umfaßt.

Gegenüber dem vorherigen Ausführungsbeispiel ist hier ferner von Vorteil, daß neben der weiter erhöhten Auflösung nun auch die Verstellrichtung des Läufers zu dem Basisteil vorzeichenrichtig erfaßt werden kann. Folgen beispielsweise die Maxima in der Reihenfolge 1 - 2 - 3 - 4 aufeinander, so bewegen sich die Meßschnäbel auseinander, während bei einer Aufeinanderfolgende 4 - 3 - 2 - 1 die Meßschnäbel aufeinander zu bewegt werden.

Auf diese Weise wird eine sehr komfortable Handhabung der erfindungsgemäßen Vorrichtung möglich, die beiden Meßschnäbel können nämlich solange aufeinander zu- und voneinander weg bewegt werden, bis sie an die zu messende geometrische Größe angepaßt sind.

Ferner ist es bevorzugt, wenn die kammartige Elektrodenanordnung in Verstellrichtung des Basisteiles abwechselnd Bereiche mit größerer und mit kleinerer relativer Dielektrizitätskonstante ($\epsilon_r$) aufweist, wobei die Bereiche in der Längsrichtung gleiche Abmaße aufweisen.

Hier ist von Vorteil, daß sich die Kapazitätswerte der Meßkondensatoren beim Verstellen - d.h. beim Übergang von dem einen Bereich in den anderen - linear ändern. Steht nämlich die Elektrodenanordnung, die an dem Läufer vorgesehen ist, zugleich über einem Bereich mit größerem und über einen Bereich mit kleinerem Dielektrizitätswert, so ergibt sich der resultierende Kapazitätswert des Meßkondensators aus der Parallelschaltung zweier Teilkapazitäten und zwar - wie bekannt - additiv. Da sich der Kapazitätswert linear mit der Fläche ändert, geht dementsprechend der Kapazitätswert des Meßkondensators linear von seinem Maximalwert in seinen Minimalwert über. Dies erleichtert ersichtlicherweise die Auswertung der entsprechenden Signale.

Weiterhin ist es bevorzugt, wenn die kammartige Elektrodenanordnung in Verstellrichtung abwechselnd Bereiche mit größerem und mit kleinerem Abstand zu der Elektrodenanordnung der Meßanordnung aufweist.

Hier gelten die gleichen Vorteile wie bereits bei der letzten Ausbildung diskutiert. Die Kapazitätswerte der Meßkondensatoren ändern sich linear zwischen ihrem Maximalwert und ihrem Minimalwert, so daß eine einfache Auswertung möglich ist.

Bei diesem Ausführungsbeispiel ist es ferner bevorzugt, wenn die Elektrodenanordnung der Meßanordnung untereinander gleiche, in Verstellrichtung gesehen nebeneinander angeordnete und gegeneinander isolierte Metallflächen umfaßt.

Diese Maßnahme ist insbesondere konstruktiv von Vorteil, denn jede der nebeneinander angeordneten Metallflächen bildet zusammen mit der Elektrodenanordnung des Basisteiles einen eigenen Meßkondensator. Auf diese Weise lassen sich entsprechend der Anzahl der Metallflächen Meßkondensatoren anordnen. Die unterschiedlichen wegabhängigen Kapazitätsänderungen bei den einzelnen Meßkondensatoren ergeben sich dabei aus dem Abstand der Metallflächen und aus ihren Abmaßen; jeweils in Längsrichtung gesehen.

Hier ist es ferner bevorzugt, wenn die kammartige Elektrodenanordnung einen Metallkamm umfaßt, dessen Zinken und dessen Lücken in Verstellrichtung gleiche Abmaße aufweisen.

Hierdurch ergibt sich der bei jedem Maßstab an sich erwünschte Vorteil, daß nämlich die Teilung der Längsmarkierung konstant ist.

Weiterhin ist es bevorzugt, wenn die Abmaße der Zinken und Lücken des Metallkammes in der Verstellrichtung doppelt so groß sind wie die Abmaße der Metallflächen der Elektrodenanordnung der Meßanordnung, während die Abmaße der Zinken und Lücken quer zur Verstellrichtung etwa gleich groß sind wie die Abmaße der Metallflächen.

Hier ist von Vorteil, daß alle Meßkapazitäten gleich groß sind, so daß gleiche Maximal- bzw. Minimalwerte eingenommen werden. Während einer von zwei benachbarten Meßkondensatoren den Maximal- bzw. Minimalwert einnimmt, weist der andere einen zwischen den beiden Extremwerten liegenden Kapazitätswert auf. Von den vier Meßkondensatoren hat jeweils einer den Maximalwert, einer den Minimalwert und die beiden anderen liegen auf Zwischenwerten, so daß aus den vier unterschiedlichen Kapazitätswerten eine genaue Lagebestimmung des Läufers zu dem Basisteil möglich ist.

In einer bevorzugten Weiterbildung steuert die Auswerteelektronik die Meßanordnung derart, daß auch während des Verstellens des Läufers die Kapazitätswerte der Meßkondensatoren zyklisch bestimmt werden.

Hier ist von Vorteil, daß die Teilung des Längsmaßstabes erheblich kleiner sein kann als der gesamte Meßbereich, denn die Auswerteelektronik bestimmt zyklisch den Verlauf der einzelnen Kapazitätswerte der Meßkondensatoren, so daß anhand der durchlaufenen Extremwerte ermittelt werden kann, wieviele zueinander identische Teilmeßbereiche (Teilungen) durchlaufen wurden.

In einer Weiterbildung ist es ferner bevorzugt, daß die Meßanordnung für jeden Meßkondensator ein Vergleichersignal aufgibt, wenn der zugeordnete Sollwertkondensator auf die vorbestimmte Spannung umgeladen wurde, und daß die Auswerteelektronik aus der zeitlichen Aufeinanderfolgen sowie aus dem zeitlichen Abstand der Vergleichersignale den Wert der zu messenden geometrischen Größe ermittelt.

Hier ist von Vorteil, daß nicht zunächst die absoluten Kapazitätswerte ermittelt werden müssen, sondern daß gleich aus der zeitlichen Reihenfolge und Abfolge der Vergleichersignale die geometrische Größe bestimmt wird. Auch dies trägt dazu bei, daß eine schnelle und genaue Messung der erwünschten Größe möglich wird. Weil nämlich keine umfangreichen Umrechnungen erforderlich sind, können sich auch keine Rundungsfehler einschleichen, die sich als Fehler fortpflanzen würden.

Weiterhin ist es bevorzugt, wenn während des Verstellens des Läufers die Kapazität des Sollwertkondensators auf einen kleineren Wert geschaltet wird als bei stehendem Läufer.

Auch durch diese Maßnahme wird in vorteilhafter Weise die Meßgenauigkeit beeinflußt. Da während des Verstellens der Sollwertkondensator eine kleinere Kapazität aufweist, kann er auch schneller umgeladen werden, als bei stehendem Läufer. Wegen des schnelleren Umladens erhöht sich aber gleichzeitig auch die Meßzyklusfrequenz, so daß pro Zeiteinheit mehr Messungen möglich sind. Außerdem kommt es während des Verstellens ja lediglich darauf an, die Extremwerte bei den Kapazitätsänderungen der Meßkondensatoren zu erfassen, während eine genaue Kapazitätsmessung lediglich bei stehendem Läufer erforderlich ist. Ferner ist hier von Vorteil, daß nunmehr auch bei einem schnellen Verstellen des Läufers gegenüber dem Basisteil keine Extremwerte "übersehen" werden können; es werden alle Extremwertdurchgänge erfaßt und gezählt. Damit ist auch diese Fehlerquelle, die bei einer sehr großen Sollwertkapazität und einem schnellen Verschieben auftreten könnte, ausgeschaltet.

Weiterhin ist es bevorzugt, wenn die Auswerteelektronik die in einem Zyklus bestimmten Kapazitätswerte je zweier beabstandet angeordneter Meßkondensatoren voneinander substrahiert und aus den gebildeten Differenzwerten die relative Stellung des Läufers in einem sich zyklisch längs des Basisteiles wiederholenden Teilmeßbereich mit einer mittleren Genauigkeit bestimmt.

Hier ist von Vorteil, daß zusätzlich zu der Grobposition, die durch die Anzahl der Extremwertdurchgänge bestimmt ist, eine Position mit mittlerer Genauigkeit bestimmt wird, welche die Lage in dem Teilmeßbereich präzisiert.

In einem weiteren Ausführungsbeispiel ist es bevorzugt, wenn die Auswerteelektronik eine Bewertungsschaltung umfaßt, die beim Verstellen des Läufers aus der Anzahl und der Reihenfolge der Kapazitätsmaxima/Kapazitätsminima vorzeichenrichtig die absolute Stellung des Läufers zu einer Nullposition an dem Basisteil bestimmt.

Diese Maßnahme hat zusätzlich zu den bereits oben erwähnten Vorteilen die weitere Auswirkung, daß die Messung von einer beliebigen Nullposition an dem Basisteil ausgehen kann. Damit sind auch Differenzmessungen möglich. Es läßt sich beispielsweise ermitteln, um wieviel eine zweite geometrische Größe von einer bereits gemessenen ersten abweicht, indem nach dem Messen der ersten Größe dieser Meßwert zur "Nullposition" erklärt wird.

Weiterhin ist es bevorzugt, wenn die Vorrichtung eine Meßkluppe und das Basisteil ein länglicher Stab ist, wobei die Meßschnäbel je rechtwinklig von dem Stab und dem Läufer abstehen und parallel zueinander aufgerichtet sind.

Ebenfalls ist es bevorzugt, wenn das Basisteil eine scheibenförmige Anordnung ist.

Ebenfalls ist es bevorzugt, wenn das Basisteil eine walzenförmige Anordnung ist.

Somit wird auf vorteilhafte Weise eine Meßkluppe zum Messen einer Strecke bzw. eines Winkels gebildet, welche die bisher genannten Vorteile in sich vereinigt.

Während ein Basisteil in scheibenförmiger Anordnung eine geringe axiale Ausdehnung aufweist, hat das Basisteil bei walzenförmiger Anordnung vor allem eine geringe radiale Ausdehnung. Beide Maßnahmen führen vorteilhafter Weise zu einer Meßkluppe mit geringen geometrischen Abmaßen.

Weiterhin ist es bevorzugt, wenn der Teilmeßbereich mit durch die Anzahl der Meßkondensatoren und die Abmaße der zugeordneten Elektroden bestimmt ist.

Hier ist von Vorteil, daß durch die Zuordnung der Teilmeßbereiche zu den Abmaßen der Elektroden kein Umrechnen der Längeninformation erforderlich ist. Die Auflösegenauigkeit wird auf diese Weise also durch die Abmaße der Elektroden bestimmt.

Schließlich ist es bevorzugt, wenn die Meßanordnung eine Anordnung von Schaltern aufweist, über die der jeweilige Meßkondensator auf eine bestimmte Spannung aufgeladen wird, wobei die dabei vom Meßkondensator gespeicherte Ladung gleichfalls in den Sollwertkondensator geladen wird.

Diese Maßnahme ist insbesondere schaltungstechnisch von Vorteil, denn lediglich durch das Öffnen und Schließen von Schaltern kann der Meßkondensator zunächst auf eine bestimmte Spannung aufgeladen werden, und dann entweder gleichzeitig oder zeitversetzt die dabei in dem Meßkondensator gespeicherte Ladung in den Sollwertkondensator "umgepumpt" werden.

Weitere Vorteile der Erfindung ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:

Fig. 1      eine perspektivische Ansicht einer als Meßkluppe ausgebildeten erfindungsgemäßen Vorrichtung;

Fig. 2      in einer perspektivischen Ansicht die Elektrodenanordnungen der Vorrichtung aus Fig. 1, im Ausschnitt;

Fig. 3      in einer schematischen Darstellung den Verlauf der Kapazitätswerte der einzelnen Meßkondensatoren in Abhängigkeit von der Verschiebung des Läufers zu dem Basisteil;

Fig. 4      in einer schematischen Darstellung Differenz- und Summenwerte der Kurven aus Fig. 3;

Fig. 5      in tabellarischer Auflistung die Kapazitätswerte aus den Kurven nach den Fig. 3 und 4, jeweils in Abhängigkeit von Meßintervall und Teilmeßbereich;

Fig. 6      eine Meßanordnung zum Bestimmen der Meßkapazitäten aus Fig. 2 durch Umladen eines Sollwertkondensators;

Fig. 7    ein weiteres Ausführungsbeispiel einer Meßanordnung, wie in Fig. 6 dargestellt;

Fig. 8    ein Flußdiagramm zur schematischen Darstellung der Kapazitätsmessung mit der Meßanordnung nach Fig. 6;

Fig. 9    ein Prinzipschaltbild einer Auswerteelektronik zum Auswerten der Signale der Meßanordnungen aus Fig. 6 oder 7;

Fig. 10   in einer schematischen Darstellung eine Bewertungsschaltung zur Weiterverarbeitung der Signale aus der Schaltung nach Fig. 9;

Fig. 11   eine weitere Auswerteschaltung zur Auswertung der Signale aus einer Meßanordnung nach den Fig. 6 oder 7, in schematischer Darstellung;

Fig. 12   den zeitlichen Verlauf der Vergleichersignale aus einer der Meßanordnungen nach den Fig. 6 oder 7 für eine in Fig. 3 bei XII angedeutete Stellung des Läufers;

Fig. 13   in einer schematischen Darstellung ein weiteres Ausführungsbeispiel der erfindungsgemäßen Vorrichtung, hier zum Messen eines Winkels;

Fig. 14   in einer schematischen Darstellung ein drittes Ausführungsbeispiel der erfindungsgemäßen Vorrichtung, hier ebenfalls zum Messen eines Winkels; und

Fig. 15   ein viertes Ausführungsbeispiel der erfindungsgemäßen Vorrichtung zum Messen eines Winkels, ebenfalls in schematischer Darstellung.

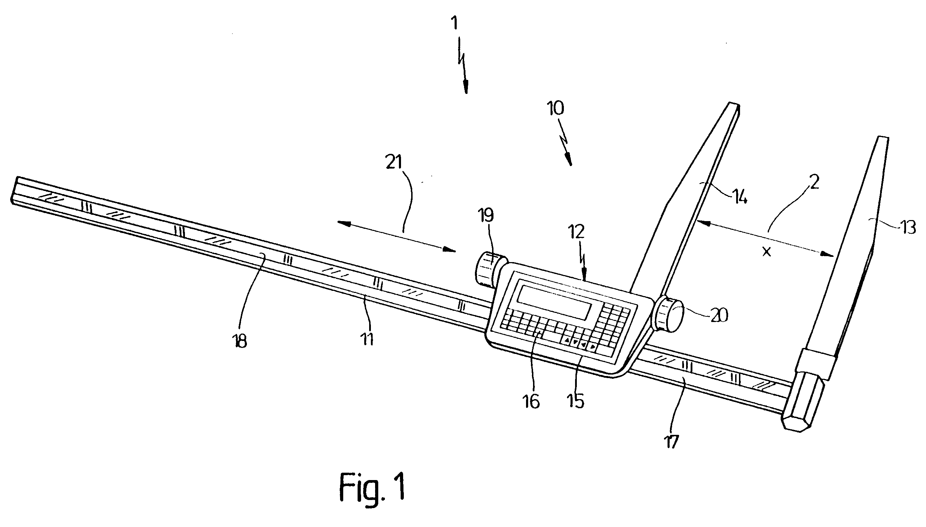

In Fig. 1 ist mit 1 eine erfindungsgemäße Vorrichtung zum Messen einer bei 2 angedeuteten geometrischen Größe darstellt. Die geometrische Größe 2 ist in dem Ausführungsbeispiel nach Fig. 1 eine Länge x.

In dem gezeigten Ausführungsbeispiel ist die Vorrichtung 1 eine Meßkluppe 10, die ein Basisteil 11 und einen darauf laufenden Läufer 12 aufweist. Ein erster Meßschnabel 13 ist starr am rechten Ende des Basisteiles 11 angeordnet, während ein zweiter Meßschnabel 14 mit dem Läufer 12 verbunden ist.

Der Läufer 12 trägt einen Kleinrechner 15, der an seiner Oberseite mit einer Folientastatur 16 verbunden ist.

In dem gezeigten Ausführungsbeispiel ist das Basisteil 11 ein länglicher Stab 17 an dem eine bei 18 angedeutete Längsmarkierung vorgesehen ist.

Ferner ist zu erkennen, daß an dem Läufer 12 zwei Schraubkappen 19 und 20 angeordnet sind, die den Abschluß eines nicht näher dargestellten Versorgungsraumes bilden. In diesem Versorgungsraum können beispielsweise Batterien zur Stromversorgung eingeschoben werden.

Zum Messen der Größe 2, also der Länge x, wird der Läufer 12 in bekannter Weise in Verstellrichtung, also in Längsrichtung 21 des Stabes 17 verschoben, bis der Abstand zwischen den Meßschnäbeln 13 und 14 an die zu messende Länge x angepaßt ist. Der Meßwert kann dann an dem Kleinrechner 15 abgelesen werden.

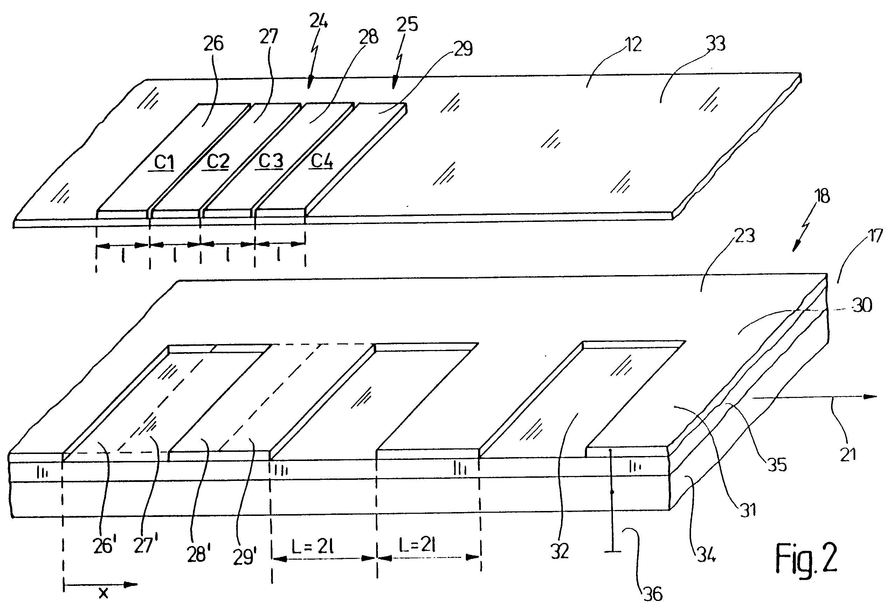

Dieser Meßwert wird mittels eines kapazitiven Meßverfahrens ermittelt, das nun anhand von Fig. 2 erläutert wird.

Zu diesem Zweck ist an dem länglichen Stab 17 als Längsmarkierung 18 eine Elektrodenanordnung 23 vorgesehen. Weiterhin ist an dem in Fig. 2 lediglich schematisch angedeuteten Läufer 12 eine Elektrodenanordnung 24 vorgesehen, die zusammen mit der Elektrodenanordnung 23 eine Kondensatoranordnung 25 bildet.

Die Elektrodenanordnung 24 umfaßt vier Metallflächen 26, 27, 28, 29, die in Längsrichtung 21 unmittelbar nebeneinander und gegeneinander isoliert angeordnet sind. In Längsrichtung 21 gesehen weisen die Metallflächen 26, 27, 28, 29 eine mit l bezeichnete Länge auf, die in dem gezeigten Ausführungsbeispiel beispielsweise 0,8 mm beträgt.

Die mit der Elektrodenanordnung 24 zusammenwirkende Elektrodenanordnung 23 ist kammartig ausgebildet und umfaßt einen Metallkamm 30 mit Zinken 31 und Lücken 32. In Längsrichtung 21 gesehen weisen die Zinken 31 und Lücken 32 je eine Länge $L = 2l$ auf.

Es sei noch erwähnt, daß die Elektrodenanordnung 23 auf einem Isoliermaterial 33 angeordnet ist.

In Fig. 2 ist schematisch angedeutet, daß der längliche Stab 17 ein metallisches Vollmaterial 34 umfaßt, auf dem eine elektrisch isolierende Platte 35 angeordnet ist. Auf der Platte 35 wiederum liegt der Metallkamm 30, der elektrisch mit dem metallischen Vollmaterial 34 verbunden und zusammen mit diesem bei 36 geerdet ist.

Wie bei 28' und 29' angedeutet, kommen die Metallflächen 26, 27, 28, 29 durch das Isoliermaterial 33 beabstandet auf dem Kamm 30 zu liegen. Dabei kann jede der Metallflächen 26, 27, 28, 29 nun als eine Kapazitätsplatte gegenüber Masse betrachtet werden. Je nachdem, ob eine solche Metallfläche 26, 27, 28, 29 über einen Zinken 31 oder eine Lücke 32 zu liegen kommt, weist ein derart gebildeter Meßkondensator C1, C2, C3 und C4 einen maximalen oder minimalen Kapazitätswert auf. Wegen der Beabstandung der Metallfächen 26, 27, 28, 29 um l haben benachbarte Meßkondensatoren sozusagen einen "mittleren" Abstand von l.

In Fig. 2 liegt beispielsweise die Metallfläche 29 - durch 29' lediglich angedeutet - über einem Zinken 31, so daß zwischen dem aus einem metallischen Leiter gebildeten Kamm 30 und der ebenfalls leitenden Metallfläche 29 nur ein geringer Abstand vorhanden ist. Andererseits ist der betreffende Abstand in Fig. 2 bei den Metallfächen 26 und 27 größer, so daß die Kapazitätswerte der Kondensatoren C1 und C2 einen Minimalwert aufweisen, während die Kapazitätswerte der Kondensatoren C3 und C4 einen Maximalwert aufweisen. Diese unterschiedlichen Kapazitätswerte können auch dadurch hervorgerufen werden, daß statt der Zinken 31 und Lücken 32 Bereiche mit unterschiedlicher Dielektriztätskonstante vorgesehen werden.

Beim Verschieben des Läufers 12 gegenüber dem Stab 17 in X-Richtung (Längsrichtung 21) gelangt nun die Metallfläche 27 teilweise über einen Zinken 31, während die Metallfäche 29 teilweise über eine Lücke 32 gelangt. Auf diese Weise nimmt der Kapazitätswert des Kondensators C2 allmählich zu, während der Kapazitätswert des Kondensators C4 allmählich abnimmt.

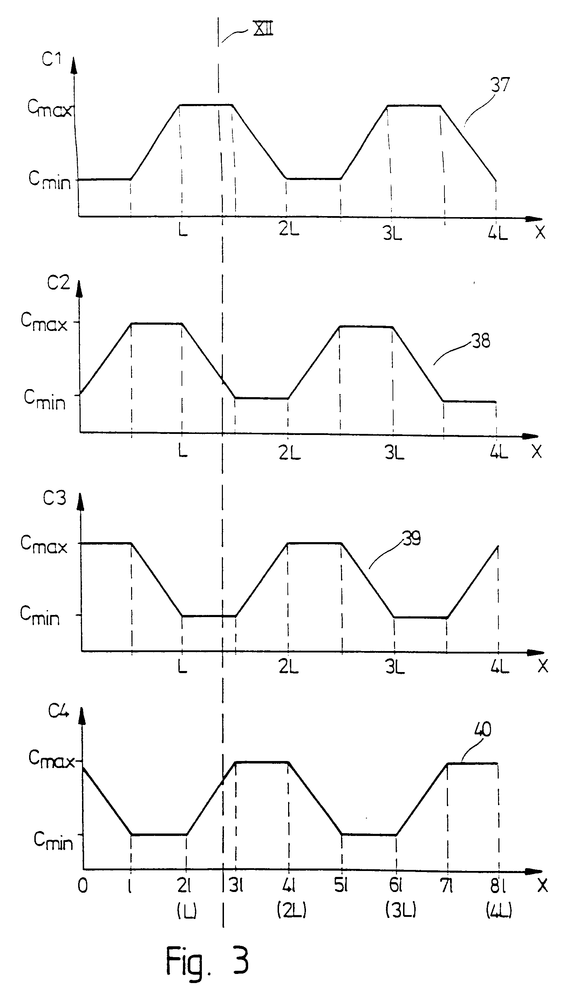

Diese Kapazitätsänderungen sind linear über dem Weg X, wie dies in Fig. 3 dargestellt ist.

Dieser lineare Zusammenhang ergibt sich dadurch, daß bei teilweise über einem Zinken und teilweise über einer Lücke stehender Metallfäche 26, 27, 28, 29 jeder Meßkondensator C1, C2, C3, C4 sozusagen aus zwei Teilkondensatoren gebildet wird, deren Kapazitäten sich addieren. Da sich beim Verschieben des Läufers 12 der über einen Zinken 31 oder einer Lücke 32 liegende Teilbereich einer Metallfläche 26, 27, 28, 29 linear mit dem Weg X ändert, ergibt sich der dargestellte lineare Zusammenhang.

Ferner ist zu bemerken, daß sowohl die Metallfächen, 26, 27, 28, 29 als auch die Zinken 31 und Lücken 32 quer zu der Längsrichtung 21 gleiche Abmaße aufweisen, so daß die Kapazitäten der Kondensatoren C1, C2, C3 und C4 gleiche Maximal-und Minimalwerte einnehmen.

In Fig. 3 ist weiterhin zu erkennen, daß die mit 37, 38, 39 und 40 bezeichneten Verläufe der Kapazitätswerte in Abhängigkeit von der X-Richtung eine Periodizität von 2 L oder 4 l aufweisen. Jeweils nach einer Verschiebung um 2 L ist das Muster der Kapazitätswerte der Kondensatoren C1 - C4 wieder identisch. Insoweit weist die Längsmarkierung 18 eine Reihe von Teilmeßbereichen der Länge 2L auf, wobei jeder Teilmeßbereich vier Meßintervalle der Länge l umfaßt.

Ferner ist zu erkennen, daß wegen der geometrischen Abstände jeweils zwei Kondensatoren zueinander um 180° "phasenverschoben" wirken, so ist C1 immer dann bei Cmin wenn C3 bei Cmax ist und umgekehrt. Entsprechendes gilt für die Kondensatoren C2 und C4.

Weiterhin zeigt Fig. 3, daß jeweils für eine Verschiebung von X = 0 bis X = l zwei Kondensatoren, die zueinander so angeordnet sind, daß sie um 180° phasenverschoben wirken, ihren Maximal- bzw. Minimalwert beibehalten. Während dieser Verschiebung bleiben die entsprechenden Metallfächen 26, 27, 28, 29 nämlich entweder über einer Lücke 32 oder einem Zinken 31.

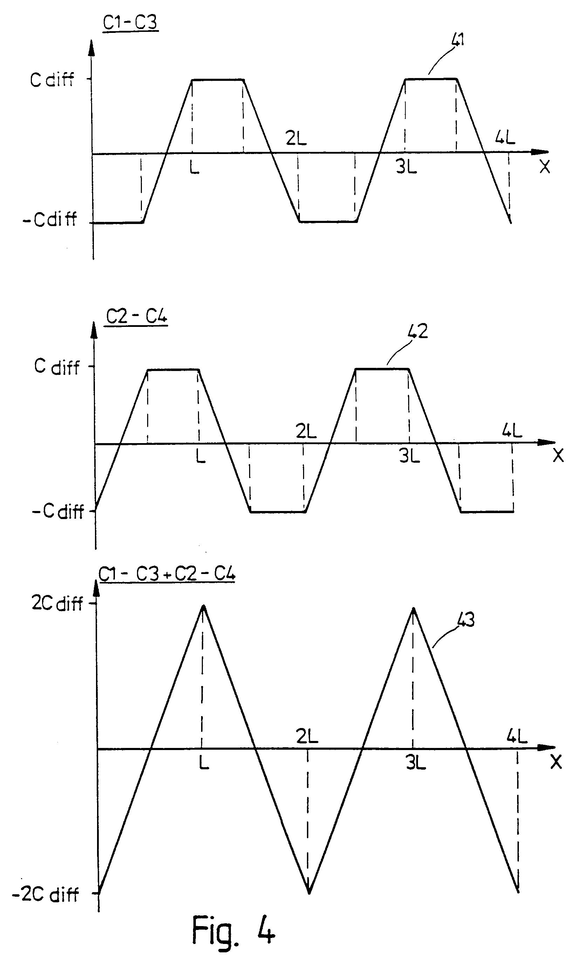

Zur weiteren Auswertung der Kapazitätskurven aus Fig. 3 sind in Fig. 4 die Differenzkurzen C1 - C3 sowie C2 - C4 und die daraus gebildete Summenkurve C1 - C3 + C2 - C4 dargestellt und mit 41, 42 bzw. 43 bezeichnet.

Wie auch schon aus Fig. 3 ersichtlich, zeigt auch Fig. 4 daß die Kondensatoren C1 und C3 gegenüber C2 und C4 so angeordnet sind, daß sie um 90° phasenverschoben wirken.

Hier ist noch zu bemerken, daß vor der Bildung der Differenzkurven 41 und 44 die Kapazitätskurven 37, 38, 39 und 40 ggf. mit dem jeweiligen Cmax normiert und um den Wert Cmin/Cmax korrigiert wurden, so daß die in Fig. 4 erkenntlichen zur X-Achse symmetrischen Kurven 41, 42, 43 entstehen.

Aus dem absoluten Kapazitätswert der Summenkurve 43 läßt sich der X-Wert nur in einem Meßintervall zwischen nl und (n + 1)l ermitteln. Welcher der vier Abschnitte der Länge l in einem Teilmeßbereich (0, 2 L) jeweils gemeint ist, ergibt sich aus den Differenzkurven 41 und 42.

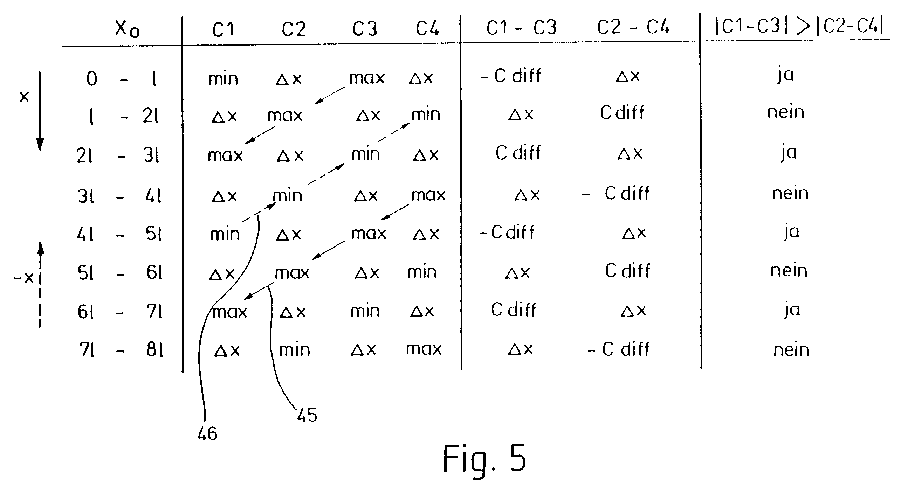

Dieser Zusammenhang ist in der in Fig. 5 dargestellten Tabelle erkennbar. Lediglich aus der Information, welche der Differenzkurven 41 oder 42 den Kapazitätsdifferenzwert Cdiff bzw. - Cdiff aufweist, läßt sich bestimmen, in welchem Meßintervall der Läufer 12 steht. Weist beispielsweise die Differenzkurve C1 - C3 den Wert Cdiff auf, so steht der Läufer 12 im Intervall 2l - 3 l bzw. 6 l - 7 l. Aus der Differenzkurve C2 - C4 bzw. aus der Summenkurve 43 kann dann die Feinauflösung $\Delta$x berechnet werden.

Zur Bestimmung, in welchem Teilmeßbereich (2 L) sich der Läufer befindet, dient die Aufeinanderfolge der maximalen bzw. minimalen Kapazitätswerte. Jeweils nach vier aufeinanderfolgenden $C_{max}$ -Werten wurde der Läufer 12 gegenüber dem Stab 17 um die Länge X = 2 L verschoben.

Aus Fig. 5 ist weiter zu entnehmen, daß aus der Abfolge der extremen Kapazitätswerte auch die Verschiebungsrichtung bestimmt werden kann. So ist durch einen Pfeil 45 die Bewegung in + X-Richtung angedeutet, bei welcher die Maximalwerte in der Reihenfolge C4 - C3 - C2 - C1 - C4 erfolgen. In der durch einen Pfeil 46 angedeuteten - X-Richtung erfolgt beispielsweise die Reihenfolge der Minimalwerte als C1 - C2 - C3 - C4 - C1.

Somit ist es mit den in Fig. 2 dargestellten Elektrodenanordnungen 23 und 24 möglich, die absolute Stellung des Läufers 12 zu dem Stab 17 wie folgt zu bestimmen:

Aus der Abfolge und der Anzahl der Maximalwertdurchgänge für die Kapazitäten kann vorzeichenrichtig die Stellung des Läufers in einem Teilmeßbereich (2 L) ermittelt werden. Innerhalb dieses Teilmeßbereiches läßt sich aus den Differenzkurven 41 und 42 die Lage des Läufers 12 auf ein Meßintervall 0 - I einengen.

In diesem Bereich 0 - I schließlich ergibt sich die Feinposition Δx aus der Summenkurve 43.

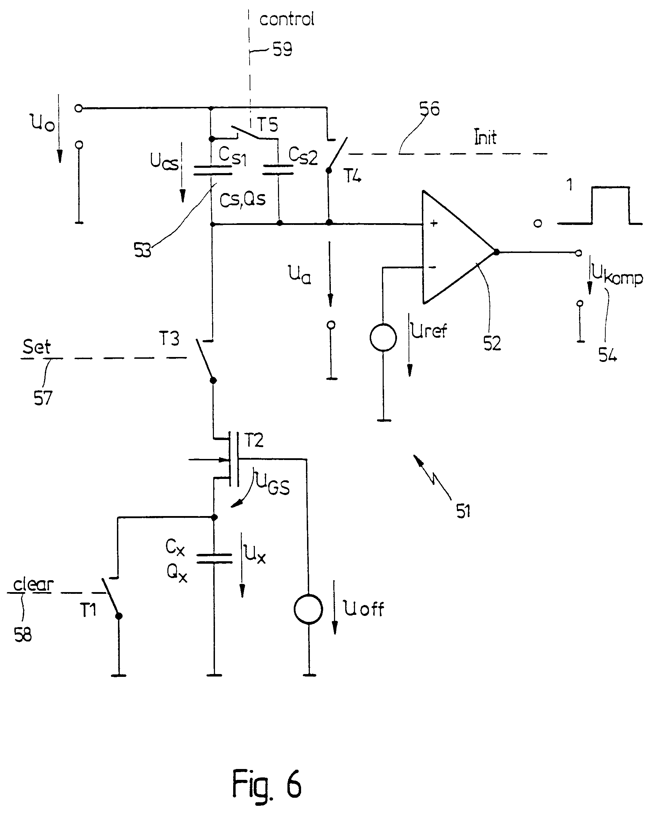

In Fig. 6 ist eine von vier Meßanordnungen 51 schematisch dargestellt, wie sie zur Bestimmung der Kapazitätswerte der Meßkondensatoren C1, C2, C3 und C4 verwendet werden. In Fig. 6 sind diese Meßkondensatoren mit Cx bezeichnet.

Die Meßanordnung 51 umfaßt einen Komparator 52, an dessen Minuseingang eine Vergleichsspannung Uref gelegt ist, mit der eine an dem Pluseingang liegende Spannung Ua verglichen wird. Die Spannung Ua liegt zwischen einem Sollwertkondensator 53 und Masse.

Der Sollwertkondensator 53, der in Fig. 6 auch mit Cs bezeichnet wird, besteht aus zwei parallel geschalteten Kondensatoren Cs1 und Cs2, die über einen Schalter T5 auftrennbar sind.

Im parallel geschalteten Zustand liegen die Kondensatoren Cs1 und Cs2 zwischen Versorgungsspannung Uo und dem Plus-Eingang des Komparators 52.

Der Plus-Eingang des Komparators 52 ist ferner über einen Schalter T3 mit der Drain-Elektrode eines Feldeffekttransistors T2 verbunden. Die Source-Elektrode des als Schalter wirkenden Feldeffekttransitors T2 ist über den bereits erwähnten Meßkondensator Cx auf Masse gelegt. Ferner ist zu erkennen, daß die Gateelektrode von T2 über eine Offset-Spannung Uoff auf Masse liegt.

Weiter ist ein Schalter T1 vorgesehen, über den der Meßkondensator Cx kurzgeschlossen werden kann.

Weiterhin ist zu erkennen, daß parallel zu dem Sollwertkondensator Cs ein Schalter T4 angeordnet ist, der im geschlossenen Zustand den Sollwertkondensator Cs kurzschließt und damit entlädt.

Am Ausgang des Komparators 52 schließlich wird eine Vergleicherspannung Ukomp abgegeben, wie dies durch den Pfeil bei 54 angedeutet ist.

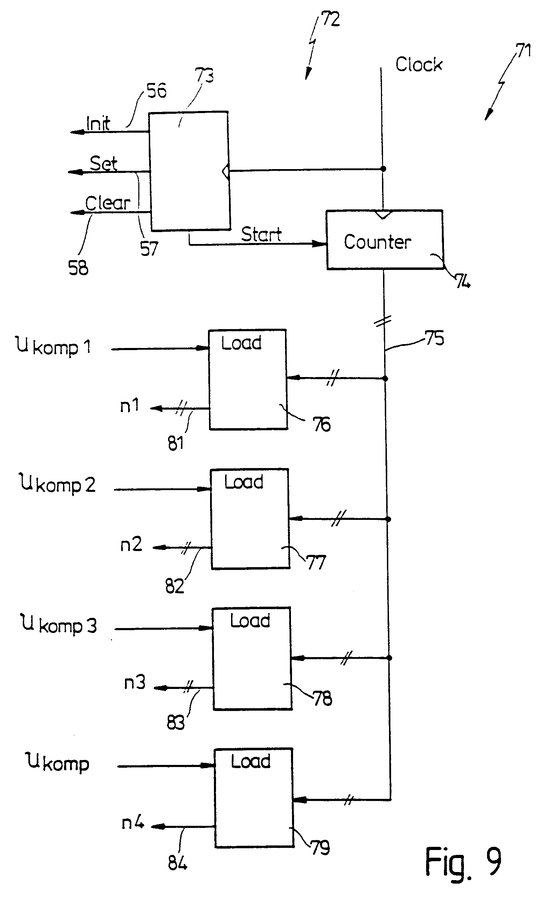

Weiterhin sind Steuerleitungen 56, 57, 58, 59 zu erkennen, über die die Schalter T4, T3, T1 und T5 von einer noch näher zu beschreibenden Auswerteelektronik (71 in Fig. 9) betätigt werden.

Die insoweit beschriebene Meßanordnung 51 arbeitet wie folgt:

Zunächst wird über die Steuerleitung 56 ein Init-Signal auf den Schalter T4 gegeben, so daß der Sollwertkondensator Cs vollständig entladen wird. Die Spannung Ua nimmt somit den Wert der Versorgungsspannung Uo an.

Über die Steuerleitung 58 wird weiterhin der Schalter T1 geschlossen, so daß auch der Meßkondensator Cx gelöscht wird.

Jetzt werden die Schalter T1 und T4 wieder geöffnet.

Über die Steuerleitung 57 wird jetzt ein Reset-Signal auf den Schalter T3 gegeben, der schließt. Somit sind jetzt der Sollwertkondensator Cs und der Meßkondensator Cx über den Feldeffekttransistor T2 miteinander in Reihe geschaltet und liegen zwischen Versorgungsspannung Uo und Masse. Jetzt beginnt ein Strom durch die Kondensatoren Cs und Cx zu fließen, der zur Folge hat, daß sich über dem Meßkondensator Cx eine Spannung Ux aufbaut. Damit geht einher, daß die Gate-Source-Spannung $U_{GS}$ des Feldeffekttransistors T2 negativer wird, wodurch der Drain-Source-Widerstand des Feldeffekttransistors T2 größer wird und gleichzeitig der Strom durch die Kondensatoren Cs und Cx abnimmt. Schließlich erreicht $U_{GS}$ den Schwellwert, der für den Feldeffekttransistor T2 typbedingt ist, und T2 schließt. Je nachdem, ob eine Offset-Spannung Uoff vorgesehen ist oder nicht, lädt sich somit der Meßkondensator Cx auf die Schwellwertspannung des Feldeffekttransistors T2, ggf. um die Offset-Spannung Uoff erhöht, auf.

Der Kondensator Cx hat jetzt die Ladung Qx = Ux Cx gespeichert. Eine entsprechende Ladungsmenge wurde ebenfalls von dem Sollwertkondensator Cs aufgenommen. Diese hat dazu geführt, daß über dem Sollwertkondensator Cs eine Spannung Ucs anliegt.

Jetzt wird der Schalter T3 geöffnet und der Schalter T1 kurzfristig geschlossen, um Cx zu entladen. Nach dem Öffnen des Schalters T1 wird der Schalter T 3 wieder geschlossen und - wie oben beschrieben - der Meßkondensator Cx lädt sich wieder auf die Spannung Ux auf.

Die dabei wieder von dem Meßkondensator Cx aufgenommene Ladung Qx addiert sich zu der bisher schon in dem Sollwertkondensator Cs gespeicherten Ladung, so daß dessen Spannung Ucs weiter erhöht wird. Auf diese Weise geht die Spannung Ua am Plus-Eingang des Komparators 52 weiter zurück.

Der soeben beschriebene Zyklus wird solange durchgeführt, bis die Spannung Ua kleiner ist als die Referenzspannung Uref. Ist dies der Fall, geht das Ausgangssignal Ukomp des invertierend beschalteten Komparators 52 von 0 auf 1. Gleichzeitig wird das zyklische Ansteuern der Steuerleitungen 57 und 58 beendet.

8

Durch das insoweit beschriebene, schrittweise Umladen des Sollwertkondensators Cs ergibt sich folgender Zusammenhang zwischen dem Kapazitätswert des Sollwertkondensators Cs, der Versorgungsspannung Uo, der Referenzspannung Uref, der vorbestimmten Spannung Ux und der Anzahl der Iterationsschritte n:

$$C_x = \frac{Uo - Uref}{Ux} \cdot \frac{Cs}{n}$$

Aus dieser Formel ist ersichtlich, daß Cx direkt proportional zu Cs und umgekehrt proportional zu n ist. Weiterhin kann über die Steuerleitung 59 mit einem Control-Signal der Schalter T5 geöffnet werden, um den Sollwertkondensator Cs um die Teilkapazität Cs2 zu verringern.

Werden die Teilkapazitäten Cs1 und Cs2 so gewählt, daß Cs1 sehr viel kleiner ist als Cs2, müssen wegen des oben beschriebenen formelmäßigen Zusammenhanges erheblich weniger Iterationsschritte n durchgeführt werden, wenn der Schalter T5 geöffnet ist.

Sollen lediglich, wie bereits in Zusammenhang mit den Fig. 2 bis 5 beschrieben, die Maximalwerte bzw. Minimalwerte des jeweiligen Meßkondensators Cx bestimmt werden, wird über die Steuerleitung 59 der Schalter T5 geöffnet, so daß wenige Iterationsschritte n pro Kapazitätsmessung durchgeführt werden. Auf diese Weise können jetzt in schneller Folge die unterschiedlichen Kapazitätswerte der Meßkondensatoren C1 - C4 bestimmt werden, solange der Läufer 12 längs des Stabes 17 bewegt wird.

Steht dagegen der Läufer 12 still, wird der Schalter T5 geschlossen, so daß nunmehr ein größerer Sollwertkondensator Cs zur Verfügung steht. Nunmehr ist eine größere Anzahl von Iterationsschritten n erforderlich, bis der Komparator 52 anspricht. Dies hat jedoch den Vorteil, daß die Meßgenauigkeit gegenüber der bei geöffnetem Schalter T5 deutlich erhöht wird.

Die Frequenz, mit der die Schalter T1 und T3 geöffnet und wieder geschlossen werden, liegt bei etwa 100 kHz, was bedeutet, daß je ms alle vier Meßkondensatoren C1 - C4 gemessen werden können.

Bei der oben bereits erwähnten Länge l = 0,8 mm und einer angestrebten Auflösung von 0,01 mm muß jeder Meßwert mindestens in 80 Inkremente unterteilt werden. Bei stehendem Läufer 12 ist daher eine 7Bit-Auflösung für die Iterationsschritte erforderlich.

Wie soeben beschrieben, kann also die Meßgenauigkeit bzw. die Auflösung sowohl durch die Wahl der vorbestimmten Spannung Ux als auch durch die Größe des Meßkondensators Cs beeinflußt werden, je kleiner nämlich Cs ist, desto mehr Iterationsschritte sind für die Bestimmung von Cx erforderlich. Ferner geht die Referenzspannung Uref in die Berechnung der Kapazitätswerte der Meßkondensatoren C1 - C4 ein.

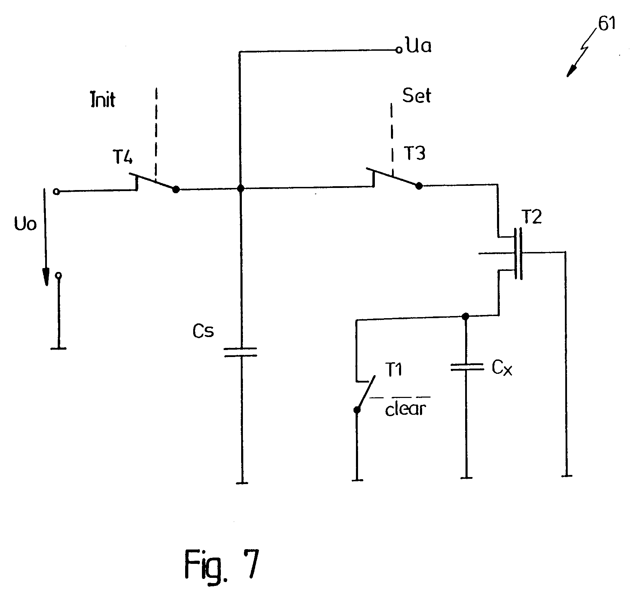

In Fig. 7 ist eine weitere Meßanordnung 61 zur Messung der Kapazität eines Meßkondensators Cx dargestellt. Abweichend von der Schaltung aus Fig. 6 ist der Sollwertkondensator Cs in Fig. 7 zwischen Ua und Masse geschaltet und nicht zwischen Ua und Uo.

Bei der Meßanordnung 61 wird der Sollwertkondensator Cs über den Schalter T4 zunächst auf die Versorgungsspannung Uo aufgeladen, um dann schrittweise durch das bereits beschriebene Wechselspiel der Schalter T1 und T3 sowie des Feldeffekttransistors T2 durch den Meßkondensator Cx entladen zu werden. Bei der Meßanordnung 61 wird also in dem Sollwertkondensator Cs gespeicherte Ladung schrittweise in den Meßkondensator Cx umgeladen, bis die Spannung Ua sich einer Vergleichsspannung Uref genähert hat. Aus Gründen der Übersichtlichkeit ist der Komparator 52 in Fig. 7 nicht dargestellt.

Im übrigen funktioniert die Meßanordnung 61 aus Fig. 7 ähnlich wie die Meßanordnung 51 aus Fig. 6, so daß auf eine nähere Erläuterung verzichtet werden kann.

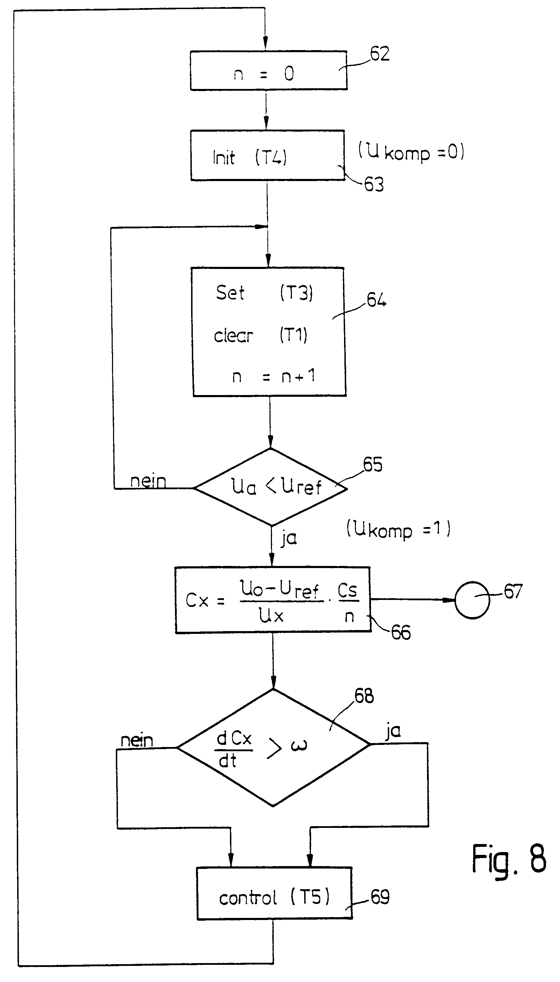

Anhand eines in Fig. 8 dargestellten Flußdiagrammes soll jetzt die weitere Auswertung der Signale der Meßanordnung 51 aus Fig. 6 beschrieben werden:

Zunächst wird bei 62 ein Schrittzähler auf n = 0 gesetzt, bevor durch das Init-Signal der Schalter T4 kurzfristig geschlossen wird (siehe Kästchen 63). Die Ausgangsspannung Ukomp ist jetzt gleich O.

Dann erfolgt der bereits beschriebene Umladezyklus durch Betätigen der Schalter T3 und T1, welcher damit endet, daß der Feldeffekttransistor T2 öffnet. Jetzt wird der Schrittzähler um 1 hochgezählt.

Bei 65 schließlich erfolgt der Vergleich, ob die Spannung Ua kleiner ist als die Vergleichsspannung Uref. Ist dies nicht der Fall, erfolgt ein weiterer Umladezyklus bei 64.

Wurde die bei 65 angegebene Abbruchbedingung erreicht, so wird bei 66 der Wert des Meßkondensators Cx mit der angegebenen Formel berechnet und an eine bei 67 angedeutete weitere Auswerteschaltung oder Auswerteroutine geliefert.

Schließlich wird bei 68 getestet, ob die Kapazitätsänderung über der Zeit größer ist als ein vorgegebener Sollwert w. Ist dies der Fall, bewegt sich der Läufer 12 mit einer gewissen Geschwindigkeit längs des Stabes 17, so daß der Schalter T5 bei 69 geöffnet werden kann. Jetzt wird mit erheblich kleinerer Sollwertkapazität Cs1 weitergemessen.

Dieses soeben anhand von Fig. 8 beschriebene Ablaufdiagramm kann einerseits wie in den Fig. 6 und 9 beschrieben, hardwaremäßig etabliert werden, es ist jedoch auch möglich, gewisse Abschnitte dieser Routine einem Mikroprozessor zu übertragen.

In Fig. 9 ist eine mit 71 bezeichnete Auswerteelektronik dargestellt, und zwar insbesondere deren Steuerschaltung 72.

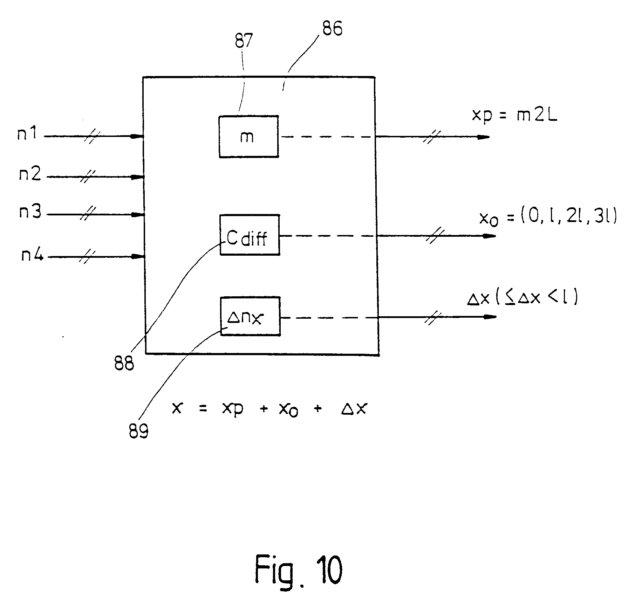

Aufgabe der Steuerschaltung 72 ist es, einerseits die Meßanordnungen 51 oder 61 mit den Steuerleitungen 56, 57, 58 zu versorgen und andererseits aus den Vergleicherspannungen Ukomp1 bis Ukomp4 entsprechende Signale zur Weiterverarbeitung in einer noch anhand von Fig. 10 zu besprechenden Bewertungsschaltung bereitzustellen.

Die Steuerschaltung 72 weist zu diesem Zweck eine Lade-/Entlade-Logik 73 auf, die einerseits die Steuersignale 56, 57, 58 abgibt und selbst von einem mit Clock bezeichnetem Taktsignal angesteuert wird. Dieses Takt-Signal Clock geht ebenfalls in einen Counter 74, der von der Lade-/Entlade-Logik 73 über eine Start-Leitung gestartet wird.

Der als Binärzähler ausgelegte Counter 74 weist an seinem Ausgang einen Datenbus 75 auf, der mit parallel-in-parallel-out-Speicherbausteinen 76, 77, 78, 79 verbunden ist. Jeder dieser Speicherbausteine 76, 77, 78, 79 ist identisch aufgebaut und weist einen Load-Eingang auf, der mit einem der vier Vergleichersignale Ukomp1 - Ukomp4 verbunden ist. Sobald der zugehörige Komparator 52 aus der betreffenden Meßanordnung 51 oder 61 von 0 auf 1 geschaltet hat, der betreffende Umladezyklus also beendet ist, wird der gerade auf dem Datenbus 75 anstehende binäre Zahlenwert in den zugeordneten Speicherbaustein 76, 77, 78, 79 geladen. Je nach dem aktuellen Kapazitätswert der Meßkondensatoren C1 - C4 werden nacheinander alle Speicherbausteine 76, 77, 78, 79 mit einem binären Zahlenwert geladen, der an parallelen Ausgängen 81, 82, 83, 84 zur Verfügung steht.

Der Ablauf ist derart, daß der Zähler 74 gestartet wird, nachdem über die Steuerleitungen 56 und 58 und somit mittels der Schalter T4 und T1 die Kondensatoren Cs und Cx entladen werden. Gleichzeitig mit dem Starten des Zählers 74, der von dem Taktsignal Clock getriggert wird, läuft der in Fig. 8 bei 64 angedeutete Umladezyklus los. In den Speicherbausteinen 76, 77, 78, 79 stehen somit am Ende eines vollständigen Meßvorganges für alle vier Meßkondensatoren C1 - C4 vier Zahlenwerte n1, n2, n3 und n4 an, die gemäß der oben beschriebenen formelmäßigen Beziehung die Kapazitätswerte der Meßkondensatoren repräsentiert.

Die Weiterverarbeitung dieser Schrittzahlen oder Meßwerte n1, n2, n3, n4 erfolgt in einer in Fig. 10 mit 86 bezeichneten Bewertungsschaltung.

Die Bewertungsschaltung 86 weist einen Zähler 87 auf, der anhand der zyklisch neu anstehenden Schrittzahlen n1 - n4 die Maximadurchgänge der Meßkondensatoren zählt.

Weiterhin ist ein mit 88 bezeichneter Bewerter vorgesehen, der die Differenzkapazitäten Cdiff ermittelt und aus ihnen die Stellung des Läufers 12 im jeweiligen Intervall (0, I) ermittelt. Ferner ist ein mit 89 bezeichneter Bewerter vorgesehen, der aus Differenzen der Schrittzahlen n1, n2, n3 und n4 die genaue Position $\Delta x$ bestimmt.

Die absolute Position X des Läufers 12 zu dem länglichen Stab 17 ergibt sich - wie in Fig. 10 angedeutet - aus der Summe dieser drei Werte. $X_P$ steht für die Anzahl der Teilbeßbereiche (2 L), um die der Läufer 12 verfahren wurde, $X_O$ für das Intervall (0, I, 2 I, 3 I) in einem vorher bestimmten Meßbereich (2 L) und $\Delta x$ für die Feinposition innerhalb eines Intervalles.

Dies wurde bereits in Zusammenhang mit den Fig. 3 bis 5 ausführlich beschrieben, so daß hier darauf verwiesen werden darf.

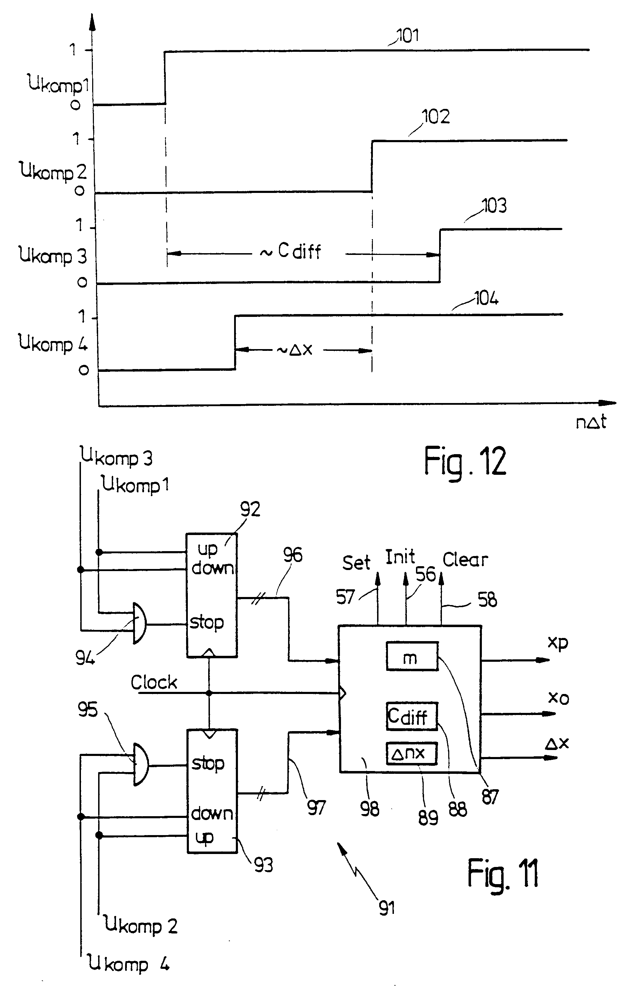

In Fig. 11 ist eine weitere Auswerteschaltung 91 dargestellt, mit der ebenfalls die Vergleichersignale Ukomp1 - Ukomp4 verarbeitet werden.

Die Auswerteelektronik 91 weist zwei Vorwärts/Rückwärts-Zähler 92 und 93 auf, deren Ausgänge 96 und 97 mit einer weiteren Bewertungsschaltung 98 verbunden sind.

Jeder der Vorwärts/Rückwärts-Zähler 92 und 93 weist einen up-Eingang, mit dem der jeweilige Zähler 92, 93 auf Vorwärtszählen geschaltet wird, sowie einen down-Eingang auf, mit dem er auf Rückwärtszählen geschaltet wird.

Ferner ist ein Stop-Eingang vorgesehen, mit dem die einmal angestoßene Zählrichtung gestoppt wird. Getaktet werden beide Zähler durch ein Taktsignal Clock, das auch in die Bewertungsschaltung 98 geführt ist.

Das Vergleichersignal Ukomp1, das dem Meßkondensator C1 zugeordnet ist, geht in den up-Eingang des Zählers 92 und über ein UND-Gatter 94 auf den Stop-Eingang dieses Zählers. Auf den down-Eingang und ebenfalls auf das UND-Gatter 94 ist der Vergleicherausgang Ukomp3 gelegt, der dem Kondensator C3 zugeordnet ist.

In entsprechender Weise sind die Vergleichersignale Ukomp2 und Ukomp4 der Meßkondensatoren C2 und C4 mit einem UND-Gatter 95 und dem Zählerbaustein 93 verschaltet.

Ferner ist in Fig. 11 angedeutet, daß in der Bewertungsschaltung 86 die bereits aus Fig. 10 bekannten Zähler 87 sowie Bewerter 88 und 89 vorgesehen sind. Weiterhin gibt in diesem Falle die Bewertungsschaltung 98 die Steuersignale 56, 57 und 58 für die Schalter T1, T3 und T4 aus.

Durch die in Fig. 11 gezeigte Schaltung können auf einfache Weise die Differenzen zwischen je zwei um 180° zueinander phasenverschoben angeordnete Meßkondensatoren bestimmt werden.

In Fig. 12 ist der zeitliche Verlauf der Vergleichersignale Ukomp1 - Ukomp4 dargestellt, wie er für eine in Fig. 3 mit XII bezeichnete Stellung des Läufers 12 erfolgt. Die Zeitachse in Fig. 12 ist mit $n \Delta t$ bezeichnet, d.h. die Anzahl n der Iterationsschritte multipliziert mit der Zeitdauer $\Delta t$ eines Iterationszyklusses.

Bei der mit XII bezeichneten Stellung aus Fig. 3 weist der Meßkondensator C1 den größten Wert auf, so daß das zugeordnete Vergleichersignal Ukomp1 zeitlich als erstes von 0 auf 1 schaltet, wie dies durch den Kurvenverlauf 101 in Fig. 12 dargestellt ist.

Im Vergleich von Fig. 3 und Fig. 12 ist zu erkennen, daß als nächstes der Meßzyklus für den Meßkondensator C4 beendet ist, dann für den Meßkondensator C2 und als letztes für den Meßkondensator C3. Die entsprechenden Kurvenverläufe sind in Fig. 12 mit 104, 102 und 103 bezeichnet.

Zurückkehrend zu Fig. 11 ist jetzt zu erkennen, daß das Vergleichersignal Ukomp1 den Zählerbaustein 92 in Vorwärtszählrichtung schaltet, und daß der Zählerbaustein 92 solange zählt, bis auch das Vergleichersignal Ukomp3 auf 1 geht, wodurch über das UND-Gatter 94 der Zählerbaustein 92 gestoppt wird. Auf der Ausgangsleitung 96 steht jetzt ein Zahlenwert an, der dem Wert der Kapazitätsdifferenz Cdiff entspricht. Dies ist in Fig. 12 angedeutet.

In gleicher Weise wird auch der Zählerbaustein 93 gestartet und wieder gestoppt, er enthält an seinem Ausgang 97 einen Zahlenwert, der der Feinposition $\Delta X$ entspricht.

Aus diesen Zahlenwerten für Cdiff und $\Delta X$ ermittelt die Bewertungsschaltung 98 in bereits beschriebener Weise die drei verschiedenen X-Werte $X_P$, $X_O$ und $\Delta X$.

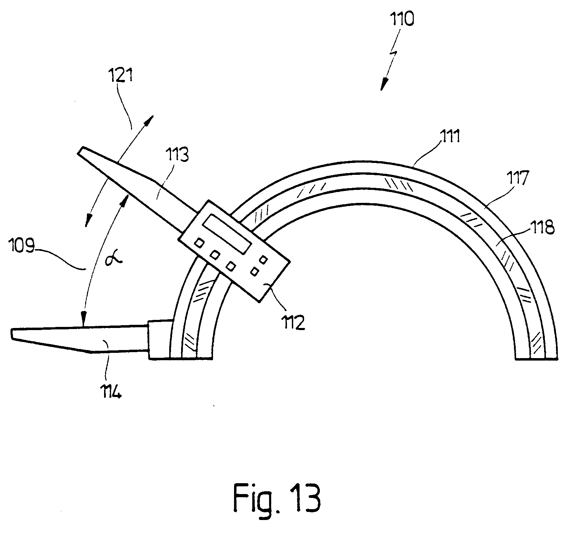

Abschließend sind in den Fig. 13 bis 14 weitere erfindungsgemäße Vorrichtung 110, 210, 310 schematisch dargestellt, die jeweils zum Messen eines Winkels $\alpha$ dienen.

Die Vorrichtung 110 aus Fig. 13 weist ein Basisteil 111 auf, an dem ein Läufer 112 in Längs- bzw. Verstellrichtung 121 verschiebbar angeordnet ist. Ferner sind zwei Meßschnäbel 113, 114 vorgesehen, die an dem Läufer 112 bzw. an dem Basisteil 111 angeordnet sind.

In dem gezeigten Ausführungsbeispiel ist das Basisteil 111 ein kreisförmig gebogener Stab 117, auf dem entsprechend gebogen eine Längsmarkierung 118 angeordnet ist.

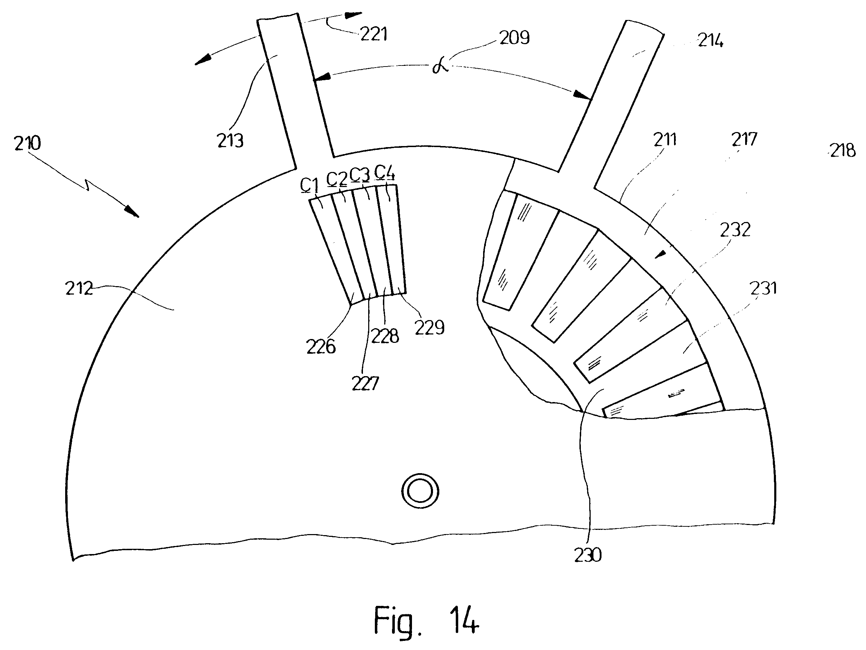

Die Vorrichtung 210 aus Fig. 14 umfaßt ein Basisteil 211, an dem ein scheibenförmiger Läufer 212 in Verstell- bzw. Verdrehrichtung 221 verdrehbar angeordnet ist. Auch hier sind zwei Meßschnäbel 213 und 214 vorgesehen, die an dem Läufer 212 bzw. an dem Basisteil 211 angeordnet sind.

In diesem Ausführungsbeispiel ist das Basisteil 211 - wie der Läufer 212 - eine scheibenförmige Anordnung 211, auf der eine entsprechend kreisförmige Längsmarkierung 218 angeordnet ist. Es ist zu erkennen, daß die Längsmarkierung 218 einen Metallkamm 230 mit Zinken 231 und Lücken 232 aufweist. Die mit der Längsmarkierung 218 zusammenwirkenden Metallflächen 226, 227, 228 und 229 sind ebenfalls in Fig. 14 schematisch angedeutet.

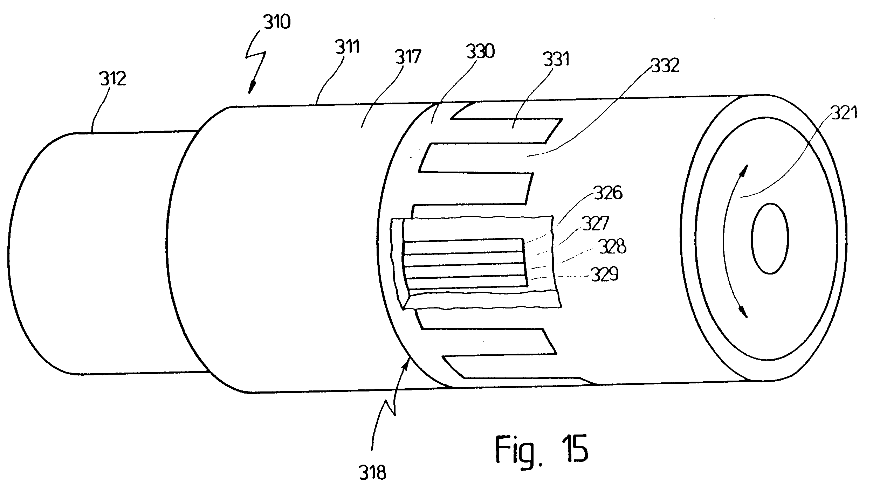

Die Vorrichtung 310 aus Fig. 15 schließlich weist ein walzenförmiges Basisteil 311 auf, in dem ein Läufer 312 in Verstell- oder Verdrehrichtung 321 drehbar gelagert ist. Bei der Vorrichtung 310 ist die Längsmarkierung 318, mit dem metallischen Kamm 330 und den Zinken 331 sowie Lücken 332 längs des Umfanges des walzenförmiges Basisteiles 311 angeordnet.

In einem in Fig. 15 schematisch angedeuteten Durchbruch in dem Basisteil 311 ist zu erkennen, daß auf der Oberfläche des Läufers 312 wieder die Metallflächen - hier 326, 327, 328 und 329 - vorgesehen sind, die mit der Längsmarkierung 318 zusammenwirken.

Während die Anordnung 210 aus Fig. 14 eine sehr flache Anordnung ist, die nur sehr geringe axiale Abmessungen aufweist, hat die Vorrichtung 310 aus Fig. 15 sehr geringe radiale Abmessungen.

Die relative Anordnung der Elektroden zueinander entspricht der Anordnung der Elektroden, wie sie anhand von Fig. 2 bereits beschrieben wurde. Im übrigen funktioniert die Messung des Winkels $\alpha$ genauso, wie die im Zusammenhang mit der Vorrichtung 1 oben bereits beschriebene Messung der Länge x.

**Patentansprüche**

1. Vorrichtung zum Messen einer geometrischen Größe (2), beispielsweise einer Länge (x) oder eines Winkels ($\alpha$), mit einem Basisteil (11, 111, 211, 311), an dem eine eine Elektrodenanordnung (24) umfassende Längsmarkierung (18, 118, 218, 318) angeordnet ist, und mit einem relativ zu dem Basisteil (11, 111, 211, 311) verstellbaren Läufer (12, 112, 212, 312), an dem eine mit der Längsmarkierung (18, 118, 218, 318) zusammenwirkende, ebenfalls eine Elektrodenanordnung (23) umfassende Meßanordnung (51, 61) vorgesehen ist, sowie mit einer Auswerteelektronik (71, 91) zur Auswertung von Signalen der Meßanordnung (51, 61), wobei an dem Basisteil (11, 111, 211, 311) und dem Läufer (12, 112, 212, 312) je ein Meßschnabel (13, 14; 113, 114; 213, 214) angeordnet ist, wobei ferner die beiden Meßschnäbel (13, 14; 113, 114; 213, 214) durch Verstellen des Läufers (12, 112, 212, 312) auf die zu messende Größe (x, $\alpha$) einstellbar sind, und wobei schließlich die Elektrodenanordnungen (23, 34) als Kondensatoranordnung (25) zusammenwirken, die zumindest einen in seinem Kapazitätswert ($C_x$) von dem Verstellen des Läufers (12, 112, 212, 312) abhängigen Meßkondensator (C1, C2, C3, C4) aufweist, dadurch gekennzeichnet, daß die Meßanordnung (51, 61) mittels des Meßkondensators (C1, C2, C3, C4) einen in seiner Kapazität Cs) bekannten Sollwertkondensator (53) umlädt.

2. Vorrichtung nach Anspruch 1, dadurch gekennzeichnet, daß der Sollwertkondensator (53) eine größere Kapazität ($C_s$) aufweist als der Meßkondensator (C1, C2, C3, C4) und daß die Meßanordnung (51, 61) den Sollwertkondensator (53) mittels des Meßkondensators (C1, C2, C3, C4) schrittweise auf eine vorbestimmte Spannung (Uo - Ureff, Ua) umlädt.

3. Vorrichtung nach einem der Ansprüche 1 oder 2, dadurch gekennzeichnet, daß die Elektrodenanordnung (23) der Längsmarkierung (18, 118, 218, 318) kammartig ausgebildet ist, daß sich beim Verstellen des Läufers (12, 112, 212, 312) der Kapazitätswert (Cx) des zumindest einen Meßkondensators (C1, C2, C3, C4) zyklisch zwischen einem Maximal- und einem Minimalwert ($C_{max}$, $C_{min}$) ändert.

4. Vorrichtung nach einem der Ansprüche 1 bis 3, dadurch gekennzeichnet, daß die Kondensatoranordnung (25) zumindest zwei gegeneinander beabstandet angeordnete Meßkondensatoren (C1, C3; C2, C4) umfaßt.

5. Vorrichtung nach Anspruch 4, dadurch gekennzeichnet, daß die Kondensatoranordnung (25) zumindest vier gegeneinander beabstandet angeordnete Meßkondensatoren (C1, C2, C3, C4) umfaßt.

6. Vorrichtung nach einem der Ansprüche 3 bis 5, dadurch gekennzeichnet, daß die kammartige Elektrodenanordnung (23) in Verstellrichtung (21, 121, 221, 321) des Basisteiles (12) abwechselnd Bereiche (32, 31) mit größerer und mit kleinerer relativer Dielektrizitätskonstante ($\epsilon_r$) aufweist, wobei die Bereiche (32, 31) in der Verstellrichtung (21, 121, 221, 321) gleiche Abmaße (L) aufweisen.

7. Vorrichtung nach einem der Ansprüche 3 bis 6, dadurch gekennzeichnet, daß die kammartige Elektrodenanordnung (23) in Verstellrichtung (21, 121, 221, 321) abwechselnd Bereiche (32, 31) mit größerem und mit kleinerem Abstand zu der Elektrodenanordnung (24) der Meßanordnung (51, 61) aufweist.

8. Vorrichtung nach einem der Ansprüche 1 bis 7, dadurch gekennzeichnet, daß die Elektrodenanordnung (24) der Meßanordnung (51, 61) untereinander gleiche in Verstellrichtung (21, 121, 221, 321) gesehen nebeneinander angeordnete und gegeneinander isolierte Metallflächen (26, 27, 28, 29; 226, 227, 228, 229; 326, 327, 328, 329) umfaßt.

9. Vorrichtung nach einem der Ansprüche 6 oder 7, dadurch gekennzeichnet, daß die kammartige Elektrodenanordnung (23) einen Metallkamm (30, 230, 330) umfaßt, dessen Zinken (31, 231, 331) und dessen Lücken (32, 232, 332) in Verstellrichtung (21, 121, 221, 321) gleiche Abmaße (L) aufweisen.

10. Vorrichtung nach den Ansprüchen 8 und 9, dadurch gekennzeichnet, daß die Abmaße (L) der Zinken (31) und der Lücken (32) des Metallkammes (30) in der Verstellrichtung (21) doppelt so groß sind wie die Abmaße (l) der Metallflächen (26, 27, 28, 29) der Elektrodenanordnung (24) der Meßanordnung (51, 61), während die Abmaße der Zinken (31) und Lücken (32) quer zu der Verstellrichtung (21) etwa gleich groß wie die Abmaße der Metallflächen (26, 27, 28, 29) sind.

EP 0 553 411 A1

**11.** Vorrichtung nach einem der Ansprüche 1 bis 10, dadurch gekennzeichnet, daß die Auswerteelektronik (71, 91) die Meßanordnung (51, 61) derart steuert, daß auch während des Verstellens des Läufers (12, 112, 212, 312) die Kapazitätswerte (Cx) der Meßkondensatoren (C1, C2, C3, C4) zyklisch bestimmt werden.

**12.** Vorrichtung nach einem der Ansprüche 2 bis 11, dadurch gekennzeichnet, daß die Meßanordnung (51, 61) für jeden Meßkondensator (C1, C2, C3, C4) ein Vergleichersignal (54, Ukomp) ausgibt, wenn der zugeordnete Sollwertkondensator (C1, C2, C3, C4) auf die vorbestimmte Spannung (Ua) umgeladen wurde, und daß die Auswerteelektronik (71, 91) aus der zeitlichen Aufeinanderfolge sowie aus dem zeitlichen Abstand der Vergleichersignale (54, Ukomp) den Wert (x, $\alpha$) der zu messenden geometrischen Größe (2, 109) ermittelt.

**13.** Vorrichtung nach einem der Ansprüche 1 bis 12, dadurch gekennzeichnet, daß während des Verstellens des Läufers (12, 112, 212, 312) die Kapazität (Cs) des Sollwertkondensators (53) auf einen kleineren Wert (Cs1) geschaltet ist als bei stehendem Läufer (12, 112).

**14.** Vorrichtung nach einem der Ansprüche 4 bis 13, dadurch gekennzeichnet, daß die Auswerteelektronik (71, 91) die in einem Zyklus bestimmten Kapazitätswerte (C1, C3; C2, C4) je zweier beabstandet angeordneter Meßkondensatoren (C1, C2, C3, C4) voneinander subtrahiert und auf den gebildeten Differenzwerten (C1 - C3, C2 - C4) die relative Stellung ($x_O$) des Läufers (12, 112, 212, 312) in einem sich zyklisch längs des Basisteiles (11, 111, 211, 311) wiederholenden Teilmeßbereich (2L) mit einer mittleren Genauigkeit bestimmt.

**15.** Vorrichtung nach einem der Ansprüche 3 bis 14, dadurch gekennzeichnet, daß die Auswerteelektronik (71, 91) eine Bewertungsschaltung (86, 98) umfaßt, die beim Verstellen des Läufers (12, 112, 212, 312) aus der Anzahl und der Reihenfolge der Kapazitätsmaxima/Kapazitätsminima ($C_{max}$,$C_{min}$) vorzeichenrichtig die absolute Stellung (XP) des Läufers (12, 112, 212, 312) zu einer Nullposition an dem Basisteil (11, 111) bestimmt.

**16.** Vorrichtung nach einem der Ansprüche 1 bis 15, dadurch gekennzeichnet, daß sie eine Meßkluppe (10) und das Basisteil (11) ein länglicher Stab (17) ist, wobei die Meßschnäbel (13, 14) je rechtwinklig von dem Stab (17) und dem Läufer (12) abstehen und parallel zueinander ausgerichtet sind.

**17.** Vorrichtung nach einem der Ansprüche 1 bis 15, dadurch gekennzeichnet, daß das Basisteil (211) eine scheibenförmige Anordnung (217) ist.

**18.** Vorrichtung nach einem der Ansprüche 1 bis 15, dadurch gekennzeichnet, daß das Basisteil (311) eine walzenförmige Anordnung (317) ist.

**19.** Vorrichtung nach einem der Ansprüche 14 bis 18, dadurch gekennzeichnet, daß der Teilmeßbereich (2L) mit durch die Anzahl der Meßkondensatoren (C1, C2, C3, C4) und die Abmaße (l, L) der zugeordneten Elektroden (23, 24) bestimmt ist.

**20.** Vorrichtung nach einem der vorhergehenden Ansprüche, dadurch gekennzeichnet, daß die Meßanordnung (51, 61) eine Anordnung von Schaltern (T1, T2, T3, T4) aufweist, über die der jeweilige Meßkondensator (C1, C2, C3, C4) auf eine bestimmte Spannung (Ux) aufgeladen wird, wobei die dabei vom Meßkondensator (C1, C2, C3, C4) gespeicherte Ladung (Qx) gleichfalls in den Sollwertkondensator (Cx) geladen wird.

13

Fig. 1

Fig.2

EP 0 553 411 A1

Fig. 3

Fig. 4

EP 0 553 411 A1

| $X_0$ | | C1 | C2 | C3 | C4 | C1 – C3 | C2 – C4 | $|C1-C3| > |C2-C4|$ |
|---|---|---|---|---|---|---|---|---|
| 0 | – 1 | min | $\Delta x$ | max | $\Delta x$ | – C diff | $\Delta x$ | ja |
| 1 | – 21 | $\Delta x$ | max | $\Delta x$ | min | $\Delta x$ | C diff | nein |
| 21 | – 31 | max | $\Delta x$ | min | $\Delta x$ | C diff | $\Delta x$ | ja |
| 31 | – 41 | $\Delta x$ | min | $\Delta x$ | max | $\Delta x$ | – C diff | nein |
| 41 | – 51 | min | $\Delta x$ | max | $\Delta x$ | – C diff | $\Delta x$ | ja |
| 51 | – 61 | $\Delta x$ | max | $\Delta x$ | min | $\Delta x$ | C diff | nein |
| 61 | – 71 | max | $\Delta x$ | min | $\Delta x$ | C diff | $\Delta x$ | ja |
| 71 | – 81 | $\Delta x$ | min | $\Delta x$ | max | $\Delta x$ | – C diff | nein |

45

46

## Fig. 5

Fig. 6

Fig. 7

Fig. 8

Fig. 9

n1 ——

n2 ——

n3 ——

n4 ——

87

86

m

$x_p = m2L$

C diff

$x_0 = (0, l, 2l, 3l)$

Δnx

$\Delta x \, (\leq \Delta x < l)$

88

89

$x = x_p + x_0 + \Delta x$

Fig. 10

Fig. 12

Fig. 11

Fig. 13

Fig. 14

Fig. 15

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | WO-A-8 901 602 (PAV PRÄZISIONS-APPARATEBAU AKTIENGESELLSCHAFT) <br> * das ganze Dokument * <br> --- | 1-11,15, 16,19,20 | G01B3/20 <br> G01D5/24 |
| Y | WO-A-8 503 358 (TRANSENSORY DEVICES INC) <br><br> * das ganze Dokument * <br> --- | 1-11,15, 16,19,20 | |
| Y | IEEE TRANSACTIONS ON INSTRUMENTATION AND MEASUREMENT <br> Bd. 38, Nr. 3, Juni 1989, NEW YORK US <br> Seiten 736 - 739 <br> K.KONDO  ; K.WATANABE 'a switched-capacitor interface for capacitive sensors with wide dynamic range' | 2 | |
| A | --- | 1,20 | |
| D,A | EP-A-0 184 584 (MAUSER-WERKE OBERNDORF GMBH) <br> * das ganze Dokument * <br> --- | 1,4-11, 17,18,19 | |
| A | CH-A-678 976 (STAEFA CONTROL SYSTEM AG) <br> * das ganze Dokument * <br> --- | 1,2,20 | |
| A | US-A-3 886 447 (K.TANAKA) <br> * das ganze Dokument * <br> --- | 1,2,20 | |
| D,A | WO-A-8 805 151 (PAV PRÄZISIONS-APPARATBAU AKTIENGESELLSCHAFT) <br> * das ganze Dokument * <br><br> ----- | 1,16-18 | |

**RECHERCHIERTE SACHGEBIETE (Int. Cl.5)**

G01B
G01D

Der vorliegende Recherchenbericht wurde für alle Patentansprüche erstellt

| Recherchenort | Abschlußdatum der Recherche | Prüfer |
|---|---|---|
| DEN HAAG | 12 MAI 1993 | BROCK T.J. |

**KATEGORIE DER GENANNTEN DOKUMENTE**

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus andern Gründen angeführtes Dokument
................................................................................................
& : Mitglied der gleichen Patentfamilie, übereinstimmendes
    Dokument